# DEMANDE DE BREVET EUROPEEN

(11) **EP 2 177 992 A2**
(43) Date de publication de la demande: **21.04.2010**
(21) Numéro de dépôt: 09290779.9
(22) Date de dépôt: 13.10.2009
(51) Int. Cl.: G06F 11/22

(54) **Procédé et dispositif de traitement de rapports de configuration**

(30) Priorité: 16.10.2008 FR 0805734
(71) Demandeur: Airbus Operations, 31060 Toulouse (FR)
(72) Inventeur: Bastien, Olivier, 31880 La Salvetat Saint Gilles (FR)
(74) Mandataire: Petit, Maxime

(57) **Abrégé**

Le procédé de traitement d'au moins un rapport de configuration logicielle d'un équipement informatique comporte, pour chaque équipement :
- une étape (435) de détermination, par un système distant dudit équipement, d'une somme de vérification calculée sur une liste nominale de références de produits des logiciels hébergés par ledit équipement,
- une étape (480) de détermination, par ledit équipement, d'une somme de vérification calculée sur une liste de références de produit des logiciels effectivement hébergés par ledit équipement,
- une étape (490) de transmission, de ladite somme de vérification déterminée par ledit équipement, et
- une étape (495) de comparaison des sommes de vérification.

Préférentiellement, chaque somme de vérification dépend d'une information représentative de la localisation de l'équipement considéré.

## Description

La présente invention concerne un procédé et un dispositif de traitement de rapports de configuration. Elle s'applique, en particulier, au reporting, à la vérification et à la mise à jour de configurations d'équipements avioniques.

La nouvelle génération d'aéronefs fait un usage intensif de téléchargement (« uploading ») sur l'ordinateur avionique embarqué (appelé « Field Loadable Software »).

Cette technologie permet :
- des corrections de système plus aisées par modification de logiciel sans affecter les parties matérielles de l'équipement,
- des évolutions de système plus aisées par mise à jour logicielle sans affecter la partie matérielle de l'équipement,
- la réutilisation d'équipements entre différents programmes d'avions avec seulement une évolution logicielle.

Une telle généralisation des « Field Loadable Software » induit un besoin d'une fonction permettant chaque équipement susceptible de recevoir un logiciel téléchargé de fournir un rapport sur sa configuration pour l'opérateur de maintenance pour des besoins de gestion de configuration au sol.

Sur les conceptions courantes des avions, la configuration est gérée par l'ingénierie des compagnies aériennes utilisatrices utilisant un référentiel au sol dans lequel sont enregistrées les configurations de chaque équipement embarqué de chaque avion, notamment la localisation de l'équipement, son numéro d'identification personnel, son numéro de série et chaque logiciel hébergé par chaque équipement.

Dans chaque avion, un système de rapport de configuration embarqué permet à l'opérateur de maintenance de requérir que chaque équipement embarqué fournisse sa configuration interne. Ce système de rapport de configuration affiche ensuite l'information de configuration reçue de l'équipement pour que l'opérateur de maintenance puisse comparer l'information reçue et l'information extraite du référentiel au sol. Si une configuration ne correspond pas, un téléchargement de logiciel peut être effectué. Cela représente une grande quantité d'information à afficher et à vérifier, ce qui accroît le risque d'une erreur humaine. De plus, les multiples occurrences du même système embarqué nécessaires pour des besoins de redondances entraînent un risque d'erreur supplémentaire.

Les développements récents d'avions montrent :
- un nombre croissant d'équipements hébergeant des « Field Loadable Sotware » (FLS),
- un nombre croissant de FLS (acronyme de « field loadable software » pour logiciel téléchargeable sur avionique) par LRU (acronyme de « Line Replaceable Unit » pour équipement échangeable sur avion) correspondant à différentes fonctions de l'avion, fournies par différents fournisseurs,
- une complexité croissante de l'architecture logicielle nécessitant des vérifications de compatibilité effectuées par un opérateur, et
- une redondance de systèmes embarqués induisant une multitude d'occurrences de LRU hébergeant la même configuration de FLS embarqués dans l'avion en différentes positions.

Sur les nouveaux avions :
- le risque d'erreur humaine est accru à cause du nombre de références de produit (« part number ») à vérifier par l'opérateur à la suite d'un seul téléchargement de logiciel,
- le risque d'incompatibilité et le risque de problèmes d'interactions de configurations est augmenté du fait de la complexité d'architecture logicielle, et
- la fonction de rapport de configuration doit être robuste et ses procédures doivent être plus restrictives en regard du risque de corruption cohérente d'information de configuration affichée (en anglais « coherent corruption of displayed configuration information ») due aux multiples occurrences des mêmes systèmes redondants embarqués.

Pour toutes ces raisons, la fonction de rapport de configuration doit être améliorée et simplifiée pour réduire la charge de travail de l'opérateur, la durée de son intervention et les risques d'erreur humaine qui y sont liés.

A cet effet, selon un premier aspect, la présente invention vise un procédé de traitement d'au moins un rapport de configuration logicielle d'un équipement informatique, **caractérisé en ce qu**'il comporte, pour chaque dit équipement :
- une étape de détermination, par un système distant dudit équipement, d'une somme de vérification calculée sur une liste nominale de références de produits des logiciels hébergés par ledit équipement,
- une étape de détermination, par ledit équipement, d'une somme de vérification calculée sur une liste de références de produit des logiciels effectivement hébergés par ledit équipement, et
- une étape de transmission, de ladite somme de vérification déterminée par ledit équipement.

Selon des caractéristiques particulières, au cours de chaque étape de détermination d'une somme de vérification, la somme de vérification est, en outre, calculée sur une information relative à la localisation de l'équipement.

Selon des caractéristiques particulières, ladite information relative à la localisation de l'équipement comporte un nom de LRU.

Selon des caractéristiques particulières, ladite information relative à la localisation de l'équipement comporte une localisation physique de l'équipement.

Selon des caractéristiques particulières, ladite information relative à la localisation de l'équipement comporte un FIN (acronyme de « Functional Item Number » pour numéro de pièce fonctionnelle).

Selon des caractéristiques particulières, au cours de chaque étape de détermination d'une somme de vérification, ladite liste de références de produit des logiciels hébergés est exhaustive.

Selon des caractéristiques particulières, le procédé objet de la présente invention, tel que succinctement exposé ci-dessus comporte une étape de fourniture d'un résultat de comparaison des dites listes de références de produits de logiciels.

Selon des caractéristiques particulières, au cours de l'étape de transmission, ladite somme de vérification est transmise conjointement à une information de configuration globale de l'équipement.

Selon des caractéristiques particulières, ladite information de configuration globale de l'équipement comporte la liste des références de produits des logiciels hébergés.

Selon des caractéristiques particulières, au cours de l'étape de transmission, ledit équipement transmet la somme de vérification à distance, l'étape de comparaison étant effectuée à distance de l'équipement.

Selon un deuxième aspect, la présente invention vise un dispositif de traitement d'au moins un rapport de configuration logicielle d'un équipement informatique, **caractérisé en ce qu**'il comporte, pour chaque dit équipement :
- un moyen de détermination, par un système distant dudit équipement, d'une somme de vérification calculée sur une liste nominale de références de produits des logiciels hébergés par ledit équipement, et
- un moyen de réception, depuis ledit équipement, d'une somme de vérification calculée sur une liste de références de produit des logiciels effectivement hébergés par ledit équipement.

Les avantages, buts et caractéristiques particulières de ce dispositif étant similaires à ceux du procédé objet de la présente invention, tel que succinctement exposé ci-dessus, ils ne sont pas rappelés ici.

D'autres avantages, buts et caractéristiques, de la présente invention ressortiront de la description qui va suivre, faite dans un but explicatif et nullement limitatif en regard des dessins annexés, dans lesquels :
- la figure 1 représente, schématiquement, des données à traiter par un opérateur, conformément à l'art antérieur,
- la figure 2 représente, schématiquement, des données à traiter par un opérateur, conformément à un premier mode de réalisation du procédé objet de la présente invention,
- la figure 3 représente, schématiquement, des données à traiter par un opérateur, conformément à un deuxième mode de réalisation du procédé objet de la présente invention,
- la figure 4 représente, sous forme de logigramme, des étapes mises en oeuvre dans le deuxième mode de réalisation du procédé objet de la présente invention, et
- la figure 5 représente, schématiquement, un mode de réalisation particulier du dispositif objet de la présente invention.

Dans la description, on ne décrit que des équipements avioniques constitués de LRU (acronyme de « Line Replaceable Unit » pour équipement échangeable sur avion). Cependant, la présente invention ne se limite pas à ce type d'équipement mais s'étend, bien au contraire, à tous les types d'équipements pouvant héberger des logiciels se trouvant dans un système avionique.

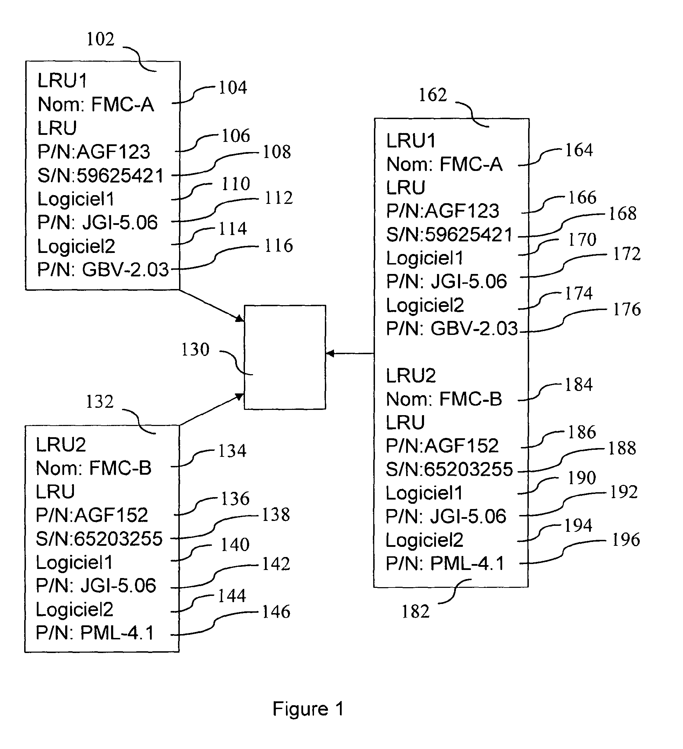

On observe, en figure 1, à gauche, des éléments 102 et 132 de rapports de configuration qu'une fonction de traitement de rapport de configuration 130 reçoit des équipements avioniques et, à droite, des éléments 162 et 182 d'un ordre d'ingénierie (en anglais « engineering order ») que la fonction de traitement de rapport de configuration 130 reçoit d'un outil au sol, dans des systèmes de l'art antérieur. On s'est limité, ici, au cas où deux LRU sont concernés et où chaque LRU n'héberge que deux logiciels.

L'élément de rapport de configuration 102 concerne un premier LRU. II comporte, pour ce premier LRU, un champ 104 de nom du LRU, un champ 106 de référence de produit du premier LRU, et champ 108 de numéro de série du premier LRU, un champ 110 de nom d'un premier logiciel, un champ 112 de référence de produit du premier logiciel, un champ 114 de nom d'un deuxième logiciel et un champ 116 de référence de produit du deuxième logiciel.

L'élément de rapport de configuration 132 concerne un deuxième LRU. Il comporte, pour ce deuxième LRU, un champ 134 de nom du LRU, un champ 136 de référence de produit du deuxième LRU, et champ 138 de numéro de série du deuxième LRU, un champ 140 de nom d'un premier logiciel, un champ 142 de référence de produit du premier logiciel, un champ 144 de nom d'un deuxième logiciel et un champ 146 de référence de produit du deuxième logiciel.

L'élément d'ordre d'ingénierie 162 concerne le premier LRU. Il comporte, pour ce premier LRU, un champ 164 de nom du LRU, un champ 166 de référence de produit du premier LRU, et champ 168 de numéro de série du premier LRU, un champ 170 de nom d'un premier logiciel, un champ 172 de référence de produit du premier logiciel, un champ 174 de nom d'un deuxième logiciel et un champ 116 de référence de produit du deuxième logiciel.

L'élément d'ordre d'ingénierie 182 concerne le deuxième LRU. Il comporte, pour ce deuxième LRU, un champ 184 de nom du LRU, un champ 186 de référence de produit du deuxième LRU, et champ 188 de numéro de série du deuxième LRU, un champ 190 de nom d'un premier logiciel, un champ 192 de référence de produit du premier logiciel, un champ 194 de nom d'un deuxième logiciel et un champ 196 de référence de produit du deuxième logiciel.

Comme on le comprend aisément à la lecture de ce qui précède, même dans une configuration très restreinte à deux LRU hébergeant chacun deux logiciels :
- les éléments de rapport de configuration comportent des occurrences multiples du même système embarqué du fait des redondances nécessaires dans les équipements avioniques, et
- la comparaison ligne à ligne des champs des éléments de rapport de configuration et des champs d'éléments d'ordre d'ingénierie est fastidieuse et sujette à des risques d'erreur humaine qui augmentent avec le nombre d'éléments de rapport de configuration à comparer.

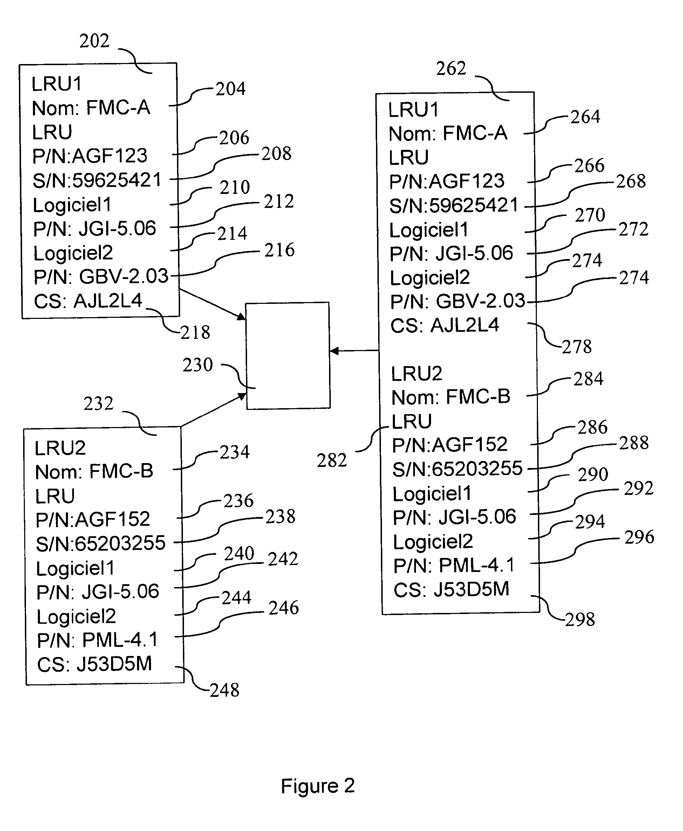

On observe, en figure 2, à gauche, des éléments 202 et 232 de rapports de configuration qu'une fonction de traitement de rapport de configuration 230 reçoit des équipements avioniques et, à droite, des éléments 262 et 282 d'un ordre d'ingénierie (en anglais « engineering order ») que la fonction de traitement de rapport de configuration 230 reçoit d'un outil au sol dans un premier mode de réalisation particulier du procédé objet de la présente invention. On s'est limité, de nouveau, au cas où deux LRU sont concernés et où chaque LRU n'héberge que deux logiciels.

L'élément de rapport de configuration 202 concerne un premier LRU. Il comporte, pour ce premier LRU, un champ 204 de nom du LRU, un champ 206 de référence de produit du premier LRU, et champ 208 de numéro de série du premier LRU, un champ 210 de nom d'un premier logiciel, un champ 212 de référence de produit du premier logiciel, un champ 214 de nom d'un deuxième logiciel, un champ 216 de référence de produit du deuxième logiciel et un champ 218 de somme de vérification basée sur, au moins, une liste de références de produit des logiciels effectivement hébergés par le premier LRU.

L'élément de rapport de configuration 232 concerne un deuxième LRU. Il comporte, pour ce deuxième LRU, un champ 234 de nom du LRU, un champ 236 de référence de produit du deuxième LRU, et champ 238 de numéro de série du deuxième LRU, un champ 240 de nom d'un premier logiciel, un champ 242 de référence de produit du premier logiciel, un champ 244 de nom d'un deuxième logiciel, un champ 246 de référence de produit du deuxième logiciel et un champ 248 de somme de vérification basée sur, au moins, une liste de références de produit des logiciels effectivement hébergés par le deuxième LRU.

L'élément d'ordre d'ingénierie 262 concerne le premier LRU. Il comporte, pour ce premier LRU, un champ 264 de nom du LRU, un champ 266 de référence de produit du premier LRU, et champ 268 de numéro de série du premier LRU, un champ 270 de nom d'un premier logiciel, un champ 272 de référence de produit du premier logiciel, un champ 274 de nom d'un deuxième logiciel, un champ 216 de référence de produit du deuxième logiciel et un champ 278 de somme de vérification basée sur, au moins, une liste nominale de références de produit des logiciels hébergés par le premier LRU.

L'élément d'ordre d'ingénierie 282 concerne le deuxième LRU. Il comporte, pour ce deuxième LRU, un champ 284 de nom du LRU, un champ 286 de référence de produit du deuxième LRU, et champ 288 de numéro de série du deuxième LRU, un champ 290 de nom d'un premier logiciel, un champ 292 de référence de produit du premier logiciel, un champ 294 de nom d'un deuxième logiciel, un champ 296 de référence de produit du deuxième logiciel et un champ 298 de somme de vérification basée sur, au moins, une liste nominale de références de produit des logiciels hébergés par le deuxième LRU.

Comme on le comprend aisément à la lecture de ce qui précède, la comparaison des configurations effective et nominale est aisément effectuée en comparant les sommes de vérification des équipements embarqués. En comparaison avec le cas de la figure 1, au lieu de 14 comparaisons, l'opérateur n'a plus que deux comparaisons à effectuer et ce n'est que si ces comparaisons sont négatives, c'est-à-dire si les sommes de vérifications ne se correspondent pas, que l'opérateur compare les champs pour l'équipement concerné.

Le premier mode de réalisation de la présente invention possède ainsi les avantages suivants :
- il réduit considérablement la charge de travail de l'opérateur,
- il réduit les risques d'erreur humaine,
- il réduit le temps nécessaire pour vérifier la configuration logicielle de tous les équipements d'un avion, et donc les coûts de l'opération, et
- en cas de non concordance des sommes de vérification, l'opérateur dispose encore de la comparaison des données traditionnellement disponibles dans les rapports de configuration.

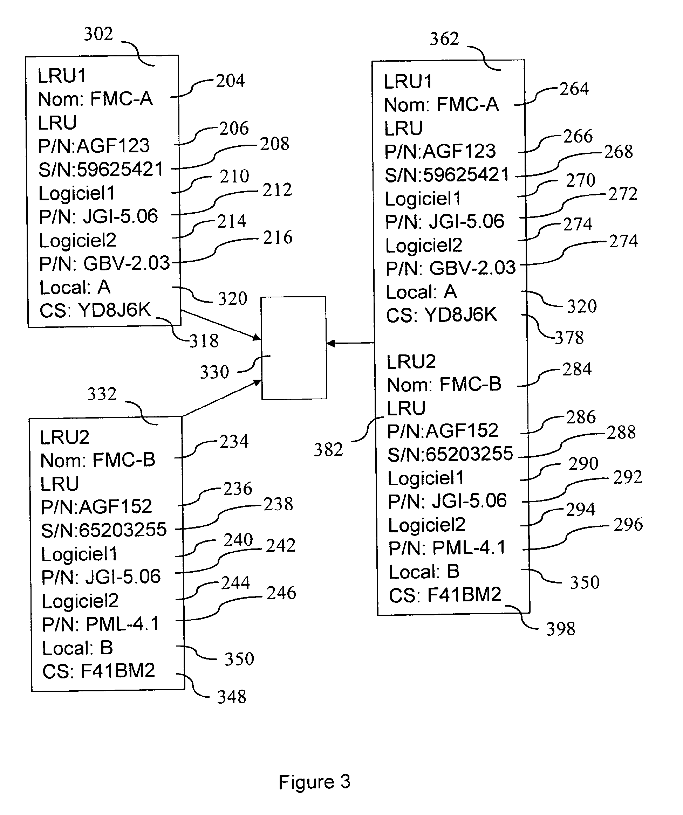

On observe, en figure 3, à gauche, des éléments 302 et 332 de rapports de configuration qu'une fonction de traitement de rapport de configuration 330 reçoit des équipements avioniques et, à droite, des éléments 362 et 382 d'un ordre d'ingénierie que la fonction de traitement de rapport de configuration 330 reçoit d'un outil au sol dans un deuxième mode de réalisation particulier du procédé objet de la présente invention. On s'est limité, de nouveau, au cas où deux LRU sont concernés et où chaque LRU n'héberge que deux logiciels.

L'élément de rapport de configuration 302 concerne le premier LRU. Il comporte, pour ce premier LRU, les champs 204 à 216 décrits ci-dessus et un champ 318 de somme de vérification basée sur, au moins, une liste de références de produit des logiciels effectivement hébergés par le premier LRU et une information 320 relative à la localisation du premier LRU.

Par exemple, l'information relative à la localisation de l'équipement comporte un nom de LRU, une localisation physique de l'équipement ou un FIN (acronyme de « Functional Item Number » pour numéro d'élément fonctionnelle).

L'élément de rapport de configuration 332 concerne le deuxième LRU. Il comporte, pour ce deuxième LRU, les champs 234 à 246 décrits ci-dessus et un champ 348 de somme de vérification basée sur, au moins, une liste de références de produit des logiciels effectivement hébergés par le deuxième LRU et une information 350 relative à la localisation du deuxième LRU.

L'élément d'ordre d'ingénierie 362 concerne le premier LRU. Il comporte, pour ce premier LRU, les champs 264 à 276 décrits ci-dessus et un champ 378 de somme de vérification basée sur, au moins, une liste nominale de références de produit des logiciels hébergés par le premier LRU et l'information 320 relative à la localisation du premier LRU utilisée pour calculer la somme de vérification du champs 318.

L'élément d'ordre d'ingénierie 382 concerne le deuxième LRU. Il comporte, pour ce deuxième LRU, les champs 284 à 296 décrits ci-dessus et un champ 398 de somme de vérification basée sur, au moins, une liste nominale de références de produit des logiciels hébergés par le deuxième LRU et l'information 350 relative à la localisation du deuxième LRU utilisée pour calculer la somme de vérification du champs 348.

Comme on le comprend aisément à la lecture de ce qui précède, la comparaison des configurations effective et nominale est aisément effectuée en comparant les sommes de vérification des équipements embarqués. En plus des avantages du premier mode de réalisation, exposés en regard de la figure 2, dans ce deuxième mode de réalisation, les risques de confusion entre LRU identiques et redondants mais placés en localisations différentes dans l'avion sont réduits puisque les sommes de vérification de leurs rapports de configuration, qui dépendent de ces localisations, sont différentes.

Les sommes de vérifications exposées ici sont, par exemple, de type CRC (acronyme de « Check Redundancy Code » pour code de redondance de vérification), SHA (acronyme de « Secure Hash Algorithm » pour algorithme de hachage sécurisé) ou MD5 (acronyme de « Message Digest 5 » pour « Concaténation de message 5 »).

Eventuellement, la localisation physique de chaque équipement est aussi présente dans chaque élément de rapport de configuration et d'ordre d'ingénierie.

Préférentiellement, la somme de vérification est calculée sur la liste exhaustive des logiciels hébergés par l'équipement avionique concerné.

On observe que le premier mode de réalisation a, des désavantages par rapport au deuxième mode de réalisation :
- pour des vérifications de configuration successives de systèmes embarqués redondants, même si le risque de corruption cohérente d'information de configuration affichée (en anglais « coherent corruption of displayed configuration information ») due aux multiples occurrences des mêmes systèmes redondants embarqués est considéré comme inexistant, on ne sait pas le démontrer au moyen des méthodologies d'analyse de sécurité. Cela est principalement dû au DAL (acronyme de « Design Assurance Level » pour niveau d'assurance de conception) de développement de la fonction de reporting de configuration qui est inférieure à celle des vérifications d'équipements, et
- il requiert des procédés industriels supplémentaires pour la vérification des processus de FLS (acronyme de « field loadable software » pour logiciel téléchargeable sur avionique).

Au contraire, le deuxième mode de réalisation ne possède pas ces désavantages. Pour les cas particuliers de systèmes avioniques embarqués redondants, il a l'avantage de fournir des sommes de vérification différentes pour la même configuration en deux positions différentes. Il couvre donc le risque de corruption cohérente d'information de configuration affichée puisque les sommes de vérification sont systématiquement différentes pour les différents équipements embarqués. Cet avantage est valable quel que soit le niveau d'assurance de conception (DAL) du développement.

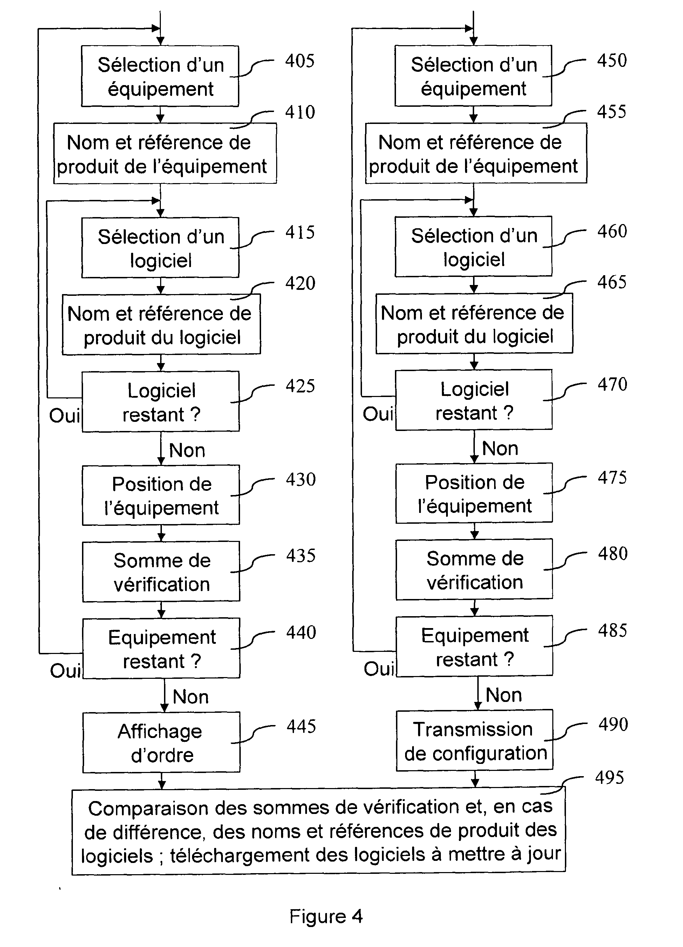

On observe, en figure 4, que le deuxième mode de réalisation du procédé objet de la présente invention comporte, du côté de l'outil au sol, d'abord, une étape 405 de sélection d'un premier équipement avionique embarqué. Puis, au cours d'une étape 410, on détermine le nom de l'équipement courant, sa référence de produit et son numéro de série et on les insère dans un ordre d'ingénierie.

Au cours d'une étape 415, on sélectionne, dans une liste exhaustive nominale d'un ordre d'ingénierie, un logiciel hébergé par l'équipement courant. Au cours d'une étape 420, on détermine le nom du logiciel courant et sa référence de produit et on les insère dans l'ordre d'ingénierie.

Au cours d'une étape 425, on détermine si la liste nominale comporte au moins un logiciel non encore sélectionné. Si oui, on retourne à l'étape 415 pour sélectionner un logiciel qui n'a pas encore été sélectionné. Si non, au cours d'une étape 430, on détermine une information représentative de la position de l'équipement courant et on l'insère dans l'ordre d'ingénierie. Au cours d'une étape 435, on calcule une somme de vérification sur la base d'au moins la liste nominale de références de produit des logiciels hébergés par l'équipement courant et l'information relative à la localisation de l'équipement courant et on insère cette somme de vérification dans l'ordre d'ingénierie.

Au cours d'une étape 440, on détermine si au moins un équipement n'a pas encore été sélectionné. Si oui, on retourne à l'étape 405 pour sélectionner un équipement qui n'a pas encore été sélectionné. Si non, on transmet l'ordre d'ingénierie à la fonction de rapport de configuration et on affiche l'ordre d'ingénierie au cours d'une étape 445.

Du côté du système avionique embarqué, au cours d'une étape 450 on sélectionne un premier équipement avionique embarqué de la même manière qu'au cours de l'étape 405, côté outil au sol. Puis, au cours d'une étape 455, on détermine le nom de l'équipement courant, sa référence de produit et son numéro de série et on les insère dans un rapport de configuration.

Au cours d'une étape 460, on sélectionne, dans une liste exhaustive des logiciels hébergés par l'équipement courant, un logiciel hébergé par l'équipement courant de la même manière qu'au cours de l'étape 415. Au cours d'une étape 465, on détermine le nom du logiciel courant et sa référence de produit et on les insère dans le rapport de configuration.

Au cours d'une étape 470, on détermine si au moins un logiciel hébergé par l'équipement courant n'a pas encore été sélectionné. Si oui, on retourne à l'étape 460 pour sélectionner un logiciel qui n'a pas encore été sélectionné. Si non, au cours d'une étape 475, on détermine une information représentative de la position de l'équipement courant et on l'insère dans le rapport de configuration. Au cours d'une étape 480, on calcule, avec le même algorithme qu'au cours de l'étape 435, une somme de vérification sur la base d'au moins la liste nominale de références de produit des logiciels hébergés par l'équipement courant et l'information relative à la localisation de l'équipement courant et on insère cette somme de vérification dans le rapport de configuration.

Au cours d'une étape 485, on détermine si au moins un équipement n'a pas encore été sélectionné. Si oui, on retourne à l'étape 450 pour sélectionner un équipement qui n'a pas encore été sélectionné. Si non, on transmet le rapport de configuration à la fonction de rapport de configuration, au cours d'une étape 490. Préférentiellement, au cours de l'étape 490 de transmission, ladite somme de vérification est transmise conjointement à une information de configuration globale de l'équipement.

L'opérateur ou la fonction de rapport de configuration compare ensuite les sommes de vérification et, éventuellement, les autres éléments de rapport. En cas de différence, on télécharge chaque logiciel différent du logiciel nominal dans le système avionique, au cours d'une étape 495.

Préférentiellement, au cours de l'étape 495, on effectue la fourniture du résultat de la comparaison conjointement avec la fourniture avec ladite liste nominale de références de produits des logiciels hébergés par ledit équipement.

On note ici que ce que l'on appelle la « fonction de rapport de configuration » est matérialisée par un système informatique qui peut être intégré à l'outil au sol, au système embarqué ou être indépendant de ces systèmes, par exemple en prenant la forme d'un ordinateur personnel portable. Cette fonction est munie de logiciels adaptés à la réception de l'ordre d'ingénierie et/ou du rapport de configuration, à l'affichage de ces éléments et, éventuellement, à la comparaison des sommes de vérification.

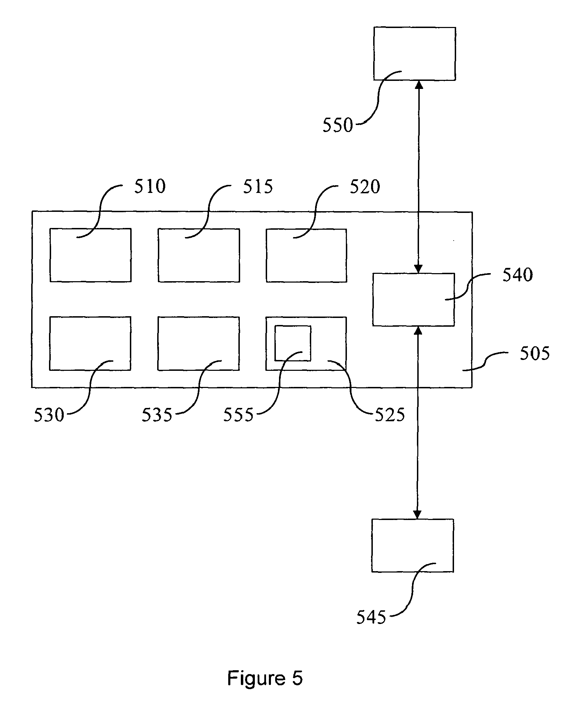

On observe, en figure 5, un tel ordinateur portable 505 comportant, une unité centrale 510, un écran d'affichage 515, une mémoire vive 520, une mémoire non volatile 525, un clavier 530, un dispositif de pointage 535 et un périphérique 540 de communication avec l'outil au sol 545 et avec le système avionique 550.

La mémoire non volatile 525 conserve un logiciel 555 comportant des instructions interprétables par l'unité centrale 510 pour mettre en oeuvre une partie du procédé objet de la présente invention, par exemple tel qu'exposé en regard de la figure 4, pour la réception de l'ordre d'ingénierie, du rapport de configuration, à l'affichage de ces éléments et, éventuellement, à la comparaison des sommes de vérification.

## Revendications

1. Procédé de traitement d'au moins un rapport de configuration logicielle d'un équipement informatique, **caractérisé en ce qu'**il comporte, pour chaque dit équipement :
- une étape (435) de détermination, par un système distant dudit équipement, d'une somme de vérification calculée sur une liste nominale de références de produits des logiciels hébergés par ledit équipement,
- une étape (480) de détermination, par ledit équipement, d'une somme de vérification calculée sur une liste de références de produit des logiciels effectivement hébergés par ledit équipement, et
- une étape (490) de transmission, de ladite somme de vérification déterminée par ledit équipement.

2. Procédé selon la revendication 1, **caractérisé en ce que**, au cours de chaque étape (435, 480) de détermination d'une somme de vérification, la somme de vérification est, en outre, calculée sur une information relative à la localisation de l'équipement.

3. Procédé selon la revendication 2, **caractérisé en ce que** ladite information relative à la localisation de l'équipement comporte un nom de LRU (acronyme de « Line Replaceable Unit » pour équipement échangeable sur avion).

4. Procédé selon l'une quelconque des revendications 2 ou 3, **caractérisé en ce que** ladite information relative à la localisation de l'équipement comporte un FIN (acronyme de « Functional Item Number » pour numéro de pièce fonctionnelle).

5. Procédé selon l'une quelconque des revendications 1 à 4, **caractérisé en ce que**, au cours de chaque étape (435, 480) de détermination d'une somme de vérification, ladite liste de références de produit des logiciels hébergés est exhaustive.

6. Procédé selon l'une quelconque des revendications 1 à 5, **caractérisé en ce qu'**il comporte une étape (495) de fourniture d'un résultat de comparaison des dites listes de références de produit de logiciels.

7. Procédé selon l'une quelconque des revendications 1 à 6, **caractérisé en ce que**, au cours de l'étape (490) de transmission, ladite somme de vérification calculée sur une liste de références de produit des logiciels effectivement hébergés par ledit équipement est transmise conjointement à une information de configuration globale de l'équipement.

8. Procédé selon la revendication 7, **caractérisé en ce que** ladite information de configuration globale de l'équipement comporte la liste des références de produits des logiciels hébergés.

9. Procédé selon l'une quelconque des revendications 1 à 8, dans lequel, au cours de l'étape (490) de transmission, ledit équipement transmet à distance la somme de vérification calculée sur une liste de références de produit des logiciels effectivement hébergés par ledit équipement, une étape de comparaison des dites listes des références de produits de logiciels étant effectuée à distance de l'équipement.

10. Dispositif de traitement d'au moins un rapport de configuration logicielle d'un équipement informatique, **caractérisé en ce qu'**il comporte, pour chaque dit équipement :
- un moyen (510, 525, 555) de détermination, par un système distant dudit équipement, d'une somme de vérification calculée sur une liste nominale de références de produits des logiciels hébergés par ledit équipement, et
- un moyen (540) de réception, depuis ledit équipement, d'une somme de vérification calculée sur une liste de références de produit des logiciels effectivement hébergés par ledit équipement.

11. Dispositif selon la revendication 10, **caractérisé en ce que** le moyen (510, 525, 555) de détermination d'une somme de vérification est adapté à ce que chaque somme de vérification soit, en outre, calculée sur une information relative à la localisation de l'équipement.

12. Dispositif selon la revendication 11, **caractérisé en ce que** le moyen (510, 525, 555) de détermination d'une somme de vérification est adapté à ce que ladite information relative à la localisation de l'équipement comporte un nom de LRU (acronyme de « Line Replaceable Unit » pour équipement échangeable sur avion).

13. Dispositif selon l'une quelconque des revendications 11 ou 12, **caractérisé en ce que** le moyen (510, 525, 555) de détermination d'une somme de vérification est adapté à ce que ladite information relative à la localisation de l'équipement comporte un FIN (acronyme de « Functional Item Number » pour numéro de pièce fonctionnelle).

14. Dispositif selon l'une quelconque des revendications 10 à 13, **caractérisé en ce qu'**il comporte un moyen de fourniture d'un résultat de comparaison desdites listes de références de produit de logiciels.

15. Dispositif selon l'une quelconque des revendications 10 à 14, **caractérisé en ce que** le moyen de réception est adapté à ce que ladite somme de vérification calculée sur une liste de références de produit des logiciels effectivement hébergés par ledit équipement soit reçue conjointement à une information de configuration globale de l'équipement, comportant la liste des références de produits des logiciels hébergés.
